# EUROPEAN PATENT APPLICATION

(11) **EP 4 737 936 A1**
(43) Date of publication of application: **06.05.2026**
(21) Application number: 24210913.0
(22) Date of filing: 05.11.2024
(51) Int. Cl.: G01S 7/02, G01S 7/288, G01S 13/34, G01S 13/87, G01S 13/00, G01S 7/40, G01S 13/931

(54) **DISTRIBUTED COHERENT RADAR**

(71) Applicant: NXP B.V., 5656 AG Eindhoven (NL)
(72) Inventor: KOPPELAAR,, Arie Geert Cornelis, 5656 AG Eindhoven (NL); GERAETS,, René, 5656 AG Eindhoven (NL); CIACCI,, Massimo, 5656 AG Eindhoven (NL); BEKOOIJ,, Marco Jan Gerrit, 5656 AG Eindhoven (NL)
(74) Representative: Hardingham, Christopher Mark

(57) **Abstract**

An apparatus comprising: a controller configured to control transmission by a Distributed Coherent Radar, DCR, system and a processor configured to process radar signals received by the DCR system;
wherein the controller is configured to provide for transmission of a first chirp from a plurality of transmit antennas of a first radar head of the DCR system, and from a first predetermined antenna in a first band and by a second predetermined antenna of a second head in a second band; and provide for transmission of a second chirp from a plurality of transmit antennas of the second radar head, the second predetermined antenna in a fourth band and by the first predetermined antenna in third band; and
the processor is configured to, based on the received signals, determine a phase-noise estimation.

## Description

### Field

The present disclosure relates to an apparatus for use with a distributed coherent radar system.

### Background

Distributed coherent radar systems are configured to transmit signals from two or more radar heads and any reflected signals, as well as signals that pass between the antennas of the same head and the antennas of different heads are received simultaneously. Effectively processing the received signal remains a challenge.

### Summary

According to a first aspect of the present disclosure there is provided an apparatus comprising:
a controller configured to control transmission by a Distributed Coherent Radar, DCR, system
a processor configured to process radar signals received by the DCR system;
wherein the controller is configured to:
   generate first control signals configured to provide for transmission, by the DCR system, of a first chirp from a plurality of transmit antennas of a first radar head of the DCR system, and for transmission of the first chirp from a first predetermined antenna of the first radar head and, restrict transmission of said first chirp to a second predetermined antenna of a second radar head of the DCR system, wherein said first control signals are configured to provide for transmission of said first chirp by the first predetermined antenna in a first predetermined frequency band and the transmission of said first chirp by the second predetermined antenna in a second predetermined frequency band, wherein the first and second predetermined frequency bands are different to one or more frequency bands in which the transmit antennas of the first radar head are caused to transmit said first chirp; and
   generate second control signals configured to provide for transmission, by the DCR system, of a second chirp, subsequent to the first chirp, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in a third predetermined frequency band and the transmission of said second chirp by the second predetermined antenna in a fourth predetermined frequency band, wherein the third and fourth predetermined frequency bands are different to one or more frequency bands in which the transmit antennas of the second radar head are caused to transmit said second chirp; and
   wherein the processor is configured to:
      receive first radar signals from the first radar head of the DCR system in response to generation of the first control signals;
      receive second radar signals from the second radar head of the DCR system in response to generation of the first control signals;
      based on a component first radar signal comprising a part of the first radar signals in said second predetermined frequency band and a component second radar signal comprising a part of the second radar signals in said first predetermined frequency band, determine a first phase-noise estimation based on said component first radar signal and component second radar signal; and
      receive third radar signals from the first radar head of the DCR system in response to generation of the second control signals;
      receive fourth radar signals from the second radar head of the DCR system in response to generation of the second control signals;
      based on a component third radar signal comprising a part of the third radar signals in said fourth predetermined frequency band and a component fourth radar signal comprising a part of the fourth radar signals in said third predetermined frequency band, determine a second phase-noise estimation based on said component third radar signal and said component fourth radar signal.

In one or more embodiments, the apparatus includes said DCR system, the DCR system comprising:
the first radar head having the plurality of transmit antennas and the first predetermined antenna, configured to provide for transmission of chirps, and a plurality of receive antennas configured to receive signals including one or more reflections of said chirps and to generate at least said first and third radar signals based on the received signals, wherein the first radar head provides for said transmission of the chirps and receipt of the signals based on a first time reference; and
the second radar head having the plurality of transmit antennas and the second predetermined antenna, configured to provide for transmission of chirps, and a plurality of receive antennas configured to receive signals including one or more reflections of said chirps and to generate at least said second and fourth radar signals based on the received signals, wherein the second radar head provides for said transmission of the chirps and receipt of the signals based on a second, different, time reference.

In one or more embodiments, said first predetermined antenna of the first radar head comprises a single transmit-receive antenna configured to both transmit the respective chirp and concurrently receive signals including said one or more reflections of said chirps for processing by the processor; and
wherein said second predetermined antenna of the second radar head comprises a single transmit-receive antenna configured to both transmit the respective chirp and concurrently receive the signals including said one or more reflections of said chirps for processing by the processor.

In one or more embodiments, the first control signals are configured to provide for transmission, by the DCR system, of the first chirp from the first predetermined antenna of the first radar head and the second predetermined antenna of the second radar head with a lower power than that used for transmission for each of the plurality of transmit antennas of the first radar head; and
wherein the second control signals are configured to provide for transmission, by the DCR system, of the second chirp from the first predetermined antenna of the first radar head and the second predetermined antenna of the second radar head with a lower power than that used for transmission for each of the plurality of transmit antennas of the second radar head.

In one or more embodiments, the first predetermined frequency band is the same as the fourth predetermined frequency band, and the second predetermined frequency band is the same as the third predetermined frequency band.

In one or more embodiments, the controller is configured to apply a frequency shift to one of the first time reference and the second time reference to cause a frequency offset between the first time reference and the second time reference.

In one or more embodiments, the controller is configured to generate transmit control signals, including said first control signals and said second control signals, configured such that the transmission of chirps from said plurality of transmit antennas of the first head and the plurality of transmit antennas of the second head is based on a doppler division multiple access waveform.

In one or more embodiments, the processor is configured to provide a downconversion to an intermediate frequency range of the first radar signals and the third radar signals from the first radar head and a downconversion to the intermediate frequency range of the second radar signals and the fourth radar signals from the second radar head.

In one or more embodiments, the apparatus includes one or more phase rotators configured such that the component second radar signal and the component third radar signal are located in a middle and/or at upper and lower ends of the intermediate frequency range.

In one or more embodiments, the transmit control signals are configured such that each transmit antenna of the plurality of transmit antennas of the first radar head and each transmit antenna of the plurality of transmit antennas of the second radar head are configured to transmit each chirp with a predetermined change in phase; and
wherein the processor is configured to provide a phase shift that reverses said predetermined change in phase for each chirp.

In one or more embodiments, the predetermined change in phase is pseudo-random.

In one or more embodiments, the processor and the controller is provided by a single DCR control device.

In one or more embodiments, the apparatus comprises a vehicle and wherein the DCR system comprises an automotive radar for said vehicle.

According to a second aspect of the disclosure we provide a method of operation of a Distributed Coherent Radar, DCR, system comprising:
generating first control signals configured to provide for transmission, by the DCR system, of a first chirp from a plurality of transmit antennas of a first radar head of the DCR system, and for transmission of the first chirp from a first predetermined antenna of the first radar head and, restrict transmission of said first chirp to a second predetermined antenna of a second radar head of the DCR system, wherein said first control signals are configured to provide for transmission of said first chirp by the first predetermined antenna in a first predetermined frequency band and the transmission of said first chirp by the second predetermined antenna in a second predetermined frequency band, wherein the first and second predetermined frequency bands are different to one or more frequency bands in which the transmit antennas of the first radar head are caused to transmit said first chirp;
receiving first radar signals from the first radar head of the DCR system in response to generation of the first control signals;
receiving second radar signals from the second radar head of the DCR system in response to generation of the first control signals;
determining a first phase-noise estimation based on a component first radar signal comprising a part of the first radar signals in said second predetermined frequency band and a component of the second radar signals comprising a part of the second radar signals in said first predetermined frequency band;
generating second control signals configured to provide for transmission, by the DCR system, of a second chirp, subsequent to the first chirp, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in a third predetermined frequency band and the transmission of said second chirp by the second predetermined antenna in a fourth predetermined frequency band, wherein the third and fourth predetermined frequency bands are different to one or more frequency bands in which the transmit antennas of the second radar head are caused to transmit said second chirp;
receiving third radar signals from the first radar head of the DCR system in response to generation of the second control signals;
receiving fourth radar signals from the second radar head of the DCR system in response to generation of the second control signals; and
determining a second phase-noise estimation based on based on a component of the third radar signals comprising a part of the third radar signals in said fourth predetermined frequency band and a component fourth radar signal comprising a part of the fourth radar signals in said third predetermined frequency band.

In one or more embodiments, the method includes:
receiving the first and third radar signals from the first radar head of the DCR system including from the first predetermined antenna;
receiving the second and fourth radar signals from the second radar head of the DCR system including from the second predetermined antenna.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of an apparatus including a distributed coherent radar, DCR, system;
Figure 2 shows an example configuration of transmit antennas and receive antennas in two radar heads in such a DCR system;
Figure 3 shows example range-doppler maps for radar signals received from a first radar head and radar signals received from a second radar head for a first chirp;
Figure 4 shows example range-doppler maps for radar signals received from the first radar head and radar signals received from the second radar head for a subsequent, second chirp; and
Figure 5 shows an example method of operation of an apparatus.

### Detailed Description

The examples of the present disclosure relate to the control of a Distributed Coherent Radar, DCR, system. The examples describe the control of the DCR system to transmit chirps in a particular way and process the received radar signals in a particular way which, in some embodiments, can improve the effectiveness of the DCR system.

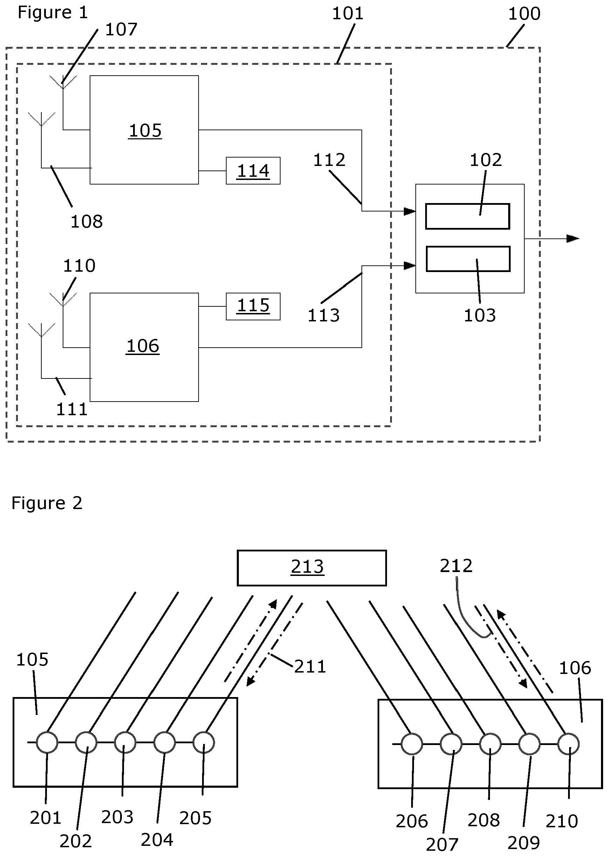

Figure 1 shows an apparatus 100, which in this example includes a Distributed Coherent Radar, DCR, system 101. The apparatus 100 further comprises a controller 102 configured to control transmission of radar signals such as chirps by the DCR system 101 and a processor 103 configured to process radar signals received by the DCR system 101. It will be appreciated that the apparatus 100 may comprise the controller 102 and the processor 103 without the DCR system 101 and thus the controller 102 and the processor 103 may be configured to couple to a DCR system and control/receive radar signals from the DCR radar system 101 to which they are coupled. Further, the controller 102 and the processor 103 are shown separate functional elements in the present example for ease of understanding, although they may be provided as a single DCR control device. In general, the entity or entities that may provide the functionality of the processor 103 and the controller 102 may take different forms, such as (i) one or more processors with associated memory storing computer program code configured to provide the functionality described herein, (ii) one or more ASICs, (iii) one or more FPGAs, (iv) hardware and software elements, or (v) combinations thereof.

With reference to figures 1 and 2, the DCR system 101 comprises a first radar head 105 and a second radar head 106. The radar heads 105, 106 are configured to transmit, at least in part, radar signals into the same region of space. The radar heads are spaced apart, as is typical in DCR systems.

The first radar head 105 has a plurality of transmit antennas 107 and a plurality of receive antennas 108. In Figure 1, the plurality of transmit antennas and receive antennas 107, 108 are shown schematically. In figure 2, which shows more detail, and as will be understood by those skilled in the art, the first radar head includes a plurality transmit antennas 201, 202 and a plurality of receive antennas 203, 204 arranged to form an antenna array. In the present example, the first radar head includes an antenna 205 that comprises a combined transmit-receive antenna or co-located antenna. The antenna 205 may be termed a "first predetermined antenna" of the first radar head 105. In the present example there is a single first predetermined antenna although in other examples, there may be a plurality of first predetermined antennas.

Likewise, the second radar head 106 has a plurality of transmit antennas 110 and a plurality of receive antennas 111. In Figure 1, the plurality of transmit antennas and receive antennas 110, 111 are shown schematically. In figure 2, which shows more detail, and as will be understood by those skilled in the art, the second radar head includes a plurality transmit antennas 206, 207 and a plurality of receive antennas 208, 209 arranged to form an antenna array. In the present example, the second radar head 106 includes an antenna 210 that comprises a combined transmit-receive antenna or co-located antenna. The antenna 210 may be termed a "second predetermined antenna" of the second radar head 106. In the present example there is a single second predetermined antenna although in other examples, there may be a plurality of second predetermined antennas.

Accordingly, the controller 102 is configured to provide control signals to each of the first radar head 105 and the second radar head 106 to provide for transmission of chirps from one or more of the respective antennas 201, 202, 205 and/or 206, 207, 210. The control signals may control one or more of: the frequency of the chirp, the phase of the chirp, the waveform of the chirp, the timing of the chirp and which of the antennas are utilised at any one time.

The radar heads 105, 106 and, in particular, the receive antennas 203, 204, 205, 208, 209, 210 are configured to receive signals 211, 212 from the environment, such as reflections of the chirps from one or more objects 213. Radar signals representing said received reflections and other signal content is provided for the processor 103 from each radar head as shown by lines 112, 113. The lines 112, 113 may represent ethernet connections.

Each radar head 105, 106 has its own local clock 114 and 115 respectively. Thus, the first radar head 105 provides for said transmission of chirps and provides the radar signals to the processor 103 based on processing of the received signals using a first time reference provided by the clock 114.

Similarly, the second radar head 106 provides for said transmission of chirps and provides the radar signals to the processor 103 based on processing of the received signals using a second time reference provided by the clock 115. The processing of the received signals to generate the radar signals provided to the processor 103 may comprise one or more of: filtering by one or more filters, down-conversion (also known as down mixing) to an intermediate frequency by one or more mixers, phase shifting by one or more phase rotators and/or analog to digital conversion by an ADC circuit arrangement.

As will be described in more detail below, the single combined transmit-receive antenna of each head is used for phase-noise estimation. In other examples there may be more than one combined transmit-receive antenna in each radar head but in the present examples, only one is required for use in the phase-noise estimation described later herein.

We will now describe issues that embodiments of the present disclosure may address in some examples. In general, DCR systems 101 use multiple radar heads 105, 106 to detect targets 213 with an improved angular resolution. The radar signals from the radar heads 105, 106 are processed together by the processor 103.

The controller 103 is configured to provide control signals to the radar heads 105, 106 to transmit radar signals in the same frequency band. These signals are also received in the same frequency band after reflection against targets/objects 213. After down mixing in a receiver chain in the respective radar head, so-called beat signals are obtained. In DCR systems the phase-noise in the received signals is increased during down-mixing because the signals used for down-mixing are generated using the different time references or clocks 114, 115 than during up conversion because, for at least part of the received signals, the processes are performed in different radar heads.

Further, in DCR systems, there is a strong spurious signal from the transmit antenna(s) 201, 202, 205 to the receive antenna(s) 203, 204, 205 of the same radar head. This signal is called the monostatic spill-over signal. This spurious signal creates a low frequency beat signal. In the present example, a filter (not shown) may be provided in each respective radar head 105, 106 configured to suppress this beat signal. For example, an analog high-pass filter (not shown) may be provided to filter the received signals prior to the received signals being digitized by an Analog to Digital Converter (ADC) to prevent clipping in the ADC in the radar head.

Further, in DCR systems, there is also a so-called bistatic spill-over signal due to the existence of a direct path between the transmit antenna(s) 201, 202, 205 / 206, 207, 210 of the one radar head to the receive antenna(s) 208, 209, 210 / 203, 204, 205 of the other radar head.

The strength of this bistatic spill-over signal has been found to be dependent on the separation of the radar heads 105, 106. It has been found that strong bistatic signals can also be caused by nearby targets 213 that have a high Radar Cross Section (RCS). Accordingly, one or more filters may be provided to ensure that these (high amplitude) bistatic signals do not cause clipping in the ADC in the radar head.

The processor 103 may be configured to use the simultaneously received bistatic signals to determine information for synchronization of the first and second radar heads 105, 106.

As mentioned above, the chirps and radar signals sent and received from the transmit-receive antennas 205, 210 are used to estimate phase-noise such that compensations can be provided.

Before the processor 103 determines a phase-noise estimation, the radar signal received at the transmit-receive antennas 205, 210 must be separated from the radar signals received at the other antennas. One way to achieve this separation is to use separate frequency bands for these transmit-receive antennas 205, 210 but further measures may be applied to make the use of separate frequency bands more effective. To explain, without additional measures, the use of a separate frequency band for the transmit-receive antennas 205, 210 means that less Intermediate Frequency, IF, spectrum (i.e. post down mixing) is available for use by the other transmit antennas 201, 202, 206, 207, which can result in a reduction of the range resolution.

Furthermore, shifting of the frequency with which the transmit-receive antennas 205, 210 transmits typically requires the use of phase rotators. It is known that these phase-rotators are imperfect and introduce, without additional measures, spurs in the so-called range-Doppler maps.

Further, it is known that the beat signals in DCR systems typically do not have a constant frequency even if the observed scene is static, i.e. the targets are stationary. This non-constant frequency is a result of the frequency-offset between the two radar heads 105, 106 caused by the use of different clocks 114, 115, which are inherently non-identical. Thus, a start time of a chirp-train typically does not occur at exactly the same point in time in both radar heads 105, 106 due to, for example, e.g. clock domain crossings.

We will now describe the operation of the example apparatus 100 which may address one or more of the potential limitations of DCR systems.

The controller 102 and the processor 103 of the present example are configured to provide a MIMO scheme for the DCR system 101.

In the present example, the transmit antennas of one of the first head 105 and the second head 106 are activated for transmission of a chirp while the transmit antennas of the other of the first head 105 and the second head 106 are deactivated or restricted from transmitting the chirp. However, in order to perform phase-noise estimation it has been determined that providing for limited transmission (i.e. from a first or second predetermined antenna) from both radar heads, such as by the transmit-receive antennas 205, 210 may be advantageous.

Thus, in general, the controller 102 is configured to generate first control signals configured to provide for transmission of a first chirp from the transmit antennas 201, 202of the first radar head 105 as well as from the first predetermined antenna 205. Those first control signals may restrict transmission of said first chirp to transmission by only the transmit-receive antenna 210 of the second radar head 106.

The controller 102 is then configured to transmit a subsequent second chirp, such as the next chirp, from the second radar head 106. Accordingly, the controller 102 may be configured to generate second control signals configured to provide for transmission of a subsequent, second chirp from the transmit antennas 206, 207 of the second radar head 106 as well as from the second predetermined antenna 210. Similarly, the second control signals are configured to restrict transmission of said second chirp to the transmit-receive antenna 205 of the first radar head 105.

It will be appreciated that the control signals being configured to restrict transmission may be provided by not causing them to transmit rather than by means of stopping them transmitting. What has found to be beneficial is having some limited transmission, from the radar head that is not making use of its transmit antennas, for the purpose of phase-noise estimation.

It will be appreciated that the reflections, the monostatic signals and the bistatic signals are received by the radar heads 105, 106 during and shortly after the transmission caused by the respective first and second control signals. The radar heads 105, 106, as is conventional, may include components that provide filtering, down mixing and analog to digital conversion. However, the processor 102 will be configured to receive radar signals representative of the received signals at each respective radar head. The processor 103 may then be configured to:
receive first radar signals from the first radar head 105 in response to the signals received following the transmission caused by the generation of the first control signals; and
receive second radar signals from the second radar head in response to the signals received following the transmission caused by the generation of the first control signals.

The processor 102 may then extract the radar signals that are from the transmit-receive antenna 210 and from transmit-receive antenna 205 and based on the extracted radar signals determine a first phase-noise estimation.

Similarly, if we consider the second chirp, the processor 103 is configured to:
receive third radar signals from the first radar head 105 representative of the signals received following the transmission caused by the generation of the second control signals; and
receive fourth radar signals from the second radar head 106 representative of the signals received following the transmission caused by the generation of the second control signals.

The processor 102 may then extract the radar signals that are from the transmit-receive antenna 205 and transmit-receive antenna 210 and based on the extracted radar signals determine a second phase-noise estimation.

How the phase-noise estimation is calculated is not the subject of the present application. Instead, it is advantageous which part of the received radar signals is used for phase noise estimation (and, by extension, what is transmitted from which antenna). However, the skilled person would appreciate that the phase noise is a phase impurity of the RF carrier and is added to transmitted chirp/signal in the up-mixing part of the RF front-end in the radar heads. When the same RF carrier is used for down-mixing, a time shifted version of the phase noise signal is subtracted from the received signals. Therefore, in mono-static radar sensing a part of the phase noise is cancelled. The part of phase noise that is cancelled is the so-called time-correlated part: the time-of-flight of the received signal is small compared to the phase noise decorrelation time, the phase noise component in the transmitted signal/chirp will have high correlation with the phase noise in the RF carrier that is used for down-mixing and therefore a large part of the phase noise will be cancelled. Due to the independent clocks 114 and 115, and the independent generation of the RF carrier, the phase noise realisations in radar heads 105 and 106 are uncorrelated. Therefore up-mixing in radar head 105 and down-mixing in radar head 106 will not cancel the phase noise. Having phase noise realisation phi1(t) in radar head 105 and phase noise realisation phi2(t), the effective phase noise component in the received signal in radar head 105 will be phi2(t) - phi1(t) and in radar head 106 it will be phi1(t) - phi2(t). Hence, the total phase noise realisations in the two bistatic signals will have opposite sign. Next to phase noise, the received bistatic signals will also contain phase information that is related to all the reflections in the radar scene. Due to the provision of the combined transmit-receive antenna 205, 210, the radar scene information contained in the phase is identical (up to a constant phase) in the received bistatic signals. Therefore, when we subtract the phase information contained in the two bistatic signals, the radar scene information will be cancelled and the resulting signal will contain only 2×(phi1(t) - phi2(t)) as phase information. Hence, an estimate phi1(t)-phi2(t) can be made and added to the signal from radar head 105 and subtracted from the signal from radar head 106.

Thus, a phase-noise estimation may be advantageously made per chirp, or per sample received from an ADC, of the respective radar head.

It has been realised that for targets at a shorter range it is desirable that phase-noise is suppressed. Accordingly, providing for control of a DCR system 101 that enables a phase-noise estimation is advantageous.

In order to extract the contribution of the transmit-receive antennas 205, 210 in the radar signals received at the radar heads 105, 106, the controller is configured to cause transmission by the transmit-receive antennas 205, 210 in a predetermined frequency band, which may be considered a synchronization bands, or s-band for short. In the present disclosure, first, second, third and fourth predetermined frequency bands are described, although in the examples that follow two predetermined frequency bands are used.

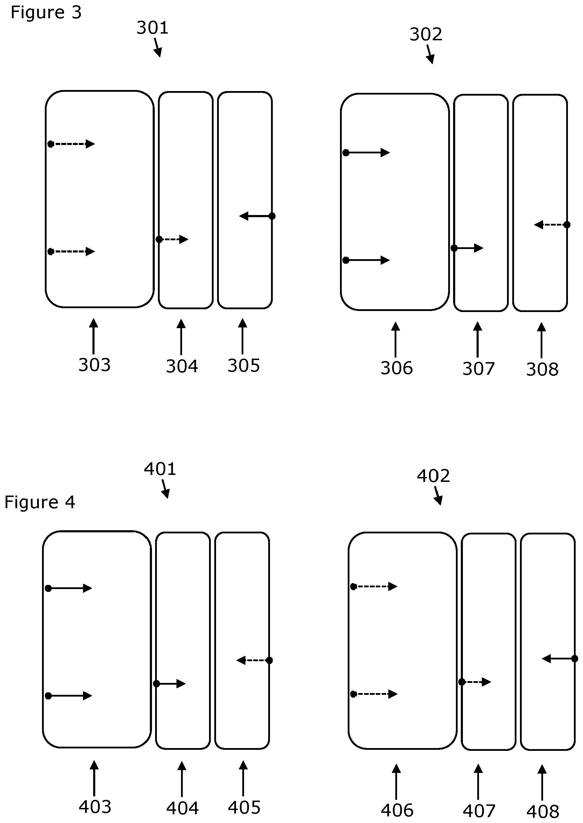

To explain further we make reference to Figures 3 and 4, which show example range doppler maps.

Figure 3 shows a first range-doppler map 301 showing signal content for the radar signals received from the first radar head 105 following the first chirp. Figure 3 also shows a second range-doppler map 302 showing signal content for the radar signals received from the second radar head 106 following the first chirp. As mentioned above, the first chirp is transmitted by the transmit antennas 201, 202 of the first radar head 105, the first predetermined antenna 205 (in the first s-band) and only the transmit-receive antenna 210 of the second radar head 106 (in the second s-band).

Figure 4 shows a first range-doppler map 401 showing signal content for the radar signals received from the first radar head 105 following the second chirp. Figure 4 also shows a second range-doppler map 402 showing signal content for the radar signals received from the second radar head 106 following the second chirp. As mentioned above, the second chirp is transmitted by the transmit antennas 206, 207 of the second radar head 106, the second predetermined antenna 210 (in the fourth s-band, which is the same band as the first in the present example) and only the transmit-receive antenna 205 of the first radar head 105 (in the third s-band, which is the same band as the second s-band in the present example).

In these range-Doppler maps are the monostatic signal content shown by dashed arrows and the bistatic signal content shown by solid line arrows. The arrows indicate where targets will appear in the range-doppler map.

For the first chirp, the transmit antennas of the first radar head are active. Accordingly, region 303 includes monostatic signal content transmitted by the first head and received by the first head. The two arrows show the content originating from the respective transmit antennas 201, 202.

Region 304 represents the first predetermined frequency band. The first predetermined antenna 205 uses the first predetermined frequency for the first chirp and therefore region 304 shows the monostatic signal content transmitted by the first head and received by the first head.

Region 305 represents the second predetermined frequency band. The second predetermined antenna 210 uses the second predetermined frequency for the first chirp and therefore region 305 shows the bistatic signal content transmitted by the second head and received by the first head.

For the first chirp, the transmit antennas 206, 207 of the second radar head are **inactive.** Accordingly, region 306 includes signal content transmitted by the transmit antennas of the first head and received by the second head. The two arrows show the content originating from the respective transmit antennas 201, 202.

Region 307 represents the first predetermined frequency band. The first predetermined antenna 205 uses the first predetermined frequency for the first chirp and therefore region 307 shows the bistatic signal content transmitted by the first head and received by the second head.

Region 308 represents the second predetermined frequency band. The second predetermined antenna 210 uses the second predetermined frequency for the first chirp and therefore region 308 shows the monostatic signal content transmitted by the second head and received by the second head.

For the second chirp, the transmit antennas of the second radar head are active. Accordingly, region 403 includes signal content transmitted by the transmit antennas 206, 207 of the second head and received by the first head. The two arrows show the content originating from the respective transmit antennas 206, 207.

Region 404 represents the first predetermined frequency band (which is, in the present example, the same as the fourth band). The second predetermined antenna 210 uses the fourth/first predetermined frequency for the second chirp and therefore region 404 shows the bistatic signal content transmitted by the second predetermined antenna 210 of the second head and received by the first head.

Region 405 represents the second predetermined frequency band (which is, in the present example, the same as the third band). The first predetermined antenna 205 uses the third/second predetermined frequency for the second chirp and therefore region 405 shows the monostatic signal content transmitted by the first predetermined antenna 205 of the first head and received by the first head.

We now refer to figure 4.

For the second chirp, the transmit antennas of the first radar head are inactive. Accordingly, region 406 includes signal content transmitted by the transmit antennas of the second head and received by the second head. The two arrows show the content originating from the respective transmit antennas 205, 206.

Region 407 represents the first predetermined frequency band (which is, in the present example, the same as the fourth band). The second predetermined antenna 210 uses the fourth/first predetermined frequency for the second chirp and therefore region 407 shows the monostatic signal content transmitted by the second predetermined antenna 210 of the second head and received by the second head.

Region 408 represents the second predetermined frequency band (which is, in the present example, the same as the third band). The first predetermined antenna 205 uses the third/second predetermined frequency for the second chirp and therefore region 408 shows the bistatic signal content transmitted by the first predetermined antenna 205 of the first head and received by the second head.

Accordingly, the use of the synchronisation bands may facilitate the effective determination of a phase-noise estimation by placing the signals transmitted by the transmit-receive antennas in a part of the frequency spectrum that allows them to be identified in the radar signals. In the most general sense, the controller may make use of first to fourth different predetermined frequency bands or s-bands for each predetermined antenna 205, 210 over the two chirps. However, in other examples, like the present example, the controller may be configured to provide for transmission by the first predetermined antenna 205 and the second predetermined antenna 210 in different predetermined frequency bands during each chirp, whichever bands are selected.

Thus, to summarize, the first control signals, which cause transmission of the first chirp represented in figure 3, are configured to provide for transmission of said first chirp by the transmit-receive antenna 205 of the first radar head 105 in a first predetermined frequency band (the synchronisation band shown by region 307 (received by second radar head 106), 304 (received by radar head 105) different to one or more frequency bands in which the first radar head is caused to transmit said first chirp (i.e. shown in region 303, 306).

Further, the transmit-receive antenna 210 of the second radar head 106 is also caused to transmit in the second predetermined frequency band (the synchronisation band shown by region 305, 308) different from the transmit antennas 201, 202.

Thus, the second control signals, which cause transmission of the second chirp represented in Figure 4, are configured to provide for transmission of said second chirp by the transmit-receive antenna 210 in the fourth (first) predetermined frequency band (the synchronisation band shown by region 404, 407) different to one or more frequency bands in which the second radar head 106 is caused to transmit said second chirp (i.e. shown in regions 403, 406).

Further, the transmit-receive antenna 205 of the first radar head 105 is caused to transmit in the third (second) predetermined frequency band (the synchronisation band shown by region 405, 408)

It has also been found that in some examples to ensure the complete IF spectrum is available for monostatic signals as well as bistatic signals, while accounting for the impact of high pass filtering performed by analog-to-digital conversion in the respective radar heads 105, 106, it may advantageous to introduce guard bands. Thus, to deal with frequency-offset and time-offset caused by the independent clocks 114, 115 so-called guard-bands are introduced. The controller 102 is configured to apply a frequency shift to one of the first time reference 114 and the second time reference 115 to cause a frequency offset between the first time reference and the second time reference. Thus, by slightly shifting the local oscillator frequency of one radar head 105, 106 relative to the other radar head 106, 105 may allow for more effective signal processing.

In the present example, the apparatus 100 provides a MIMO scheme that allows for each radar head to apply DDMA to separate the radar signals received from individual transmit antennas such that a larger virtual antenna array can be created. This MIMO scheme is practically very useful because synchronization between the radar heads 105, 106 can be achieved by estimating the chirp-train start-time offset and the frequency-offset. Thus, in general, the controller 102 is configured to transmit control signals, which may include said first control signals and said second control signals mentioned previously, configured such that the transmission of chirps from said plurality of transmit antennas of the first head 105 and the plurality of transmit antennas of the second head 106 is based on a doppler division multiple access waveform.

In some examples, the first and second predetermined frequency bands (also referred to as synchronisation bands / s-bands) are provided in the middle and the end of the IF spectrum i.e. at 304, 404, 305, 405 etc. The positioning of the first and second predetermined frequency bands may be achieved by use of phase-rotators in the radar heads 105, 106. These middle and end positions are selected because for these positions the phase-rotators do not introduce spurs. They do not introduce spurs because only rotations that are a multiple of 90° are needed. Accordingly, the first and second control signals may be configured to provide for the transmission from the transmit-receive antennas in the respective predetermined frequency band based on a 90° phase rotation by a phase rotator. With a sample rate (of the ADC) of 40 MHz, the full IF band is between 0 and 20 MHz (fs/2), half is 10 MHz (fs/4). Fs/2 can be made with phase shifts 0, 180, 0, ..., etc, while fs/4 can be made with phase shifts 0, 90, 180, 270, 0, ...etc applied to consecutive samples.

Further, the signals of one of the co-located transmit-receive antenna 205, 210 appear at a higher frequency than the ADC sampling frequency divided by 2. This results in a wrap-around effect indicative of aliasing. With the aliasing effect, frequencies in the part of a fundamental interval close to fs/2 will, when further increased beyond fs/2, end up at the left part of the next fundamental interval and due to aliasing appear as a negative frequency. Since negative frequencies cannot be distinguished from positive frequencies in a real (non-complex) receiver, they appear as positive frequencies. Because of this wrap-around and mirroring effect, larger range values will show up as a lower (positive) beat-frequency and that is why arrows in regions 305, 308, 405 and 408 are pointing to the left. Reflected targets are seen as peaks in the Range Doppler map. A mono-static target in region 304 can, due to increasing range, end up in the IF spectrum that "belongs" to bi-static signal in 305. That same target, seen as bistatic response, will for the same reason end up in the region that belongs to monostatic signals in region 304. As a result, the target detector, which may be implemented by the processor, could misinterpret targets, leading to false alarm and misdetection. Therefore, one should try to avoid detecting targets with too large range. A way to suppress the strength of targets that one does not want to see, is by applying a spreading sequence over the chirps. If one applies different spreading codes per transmit antenna, then at the receive antenna(s) one can undo the spreading for the transmit antenna one wants to detect and then apply the Range-Doppler processing. In that case an overrange target will not appear as a peak in the unwanted region, but as pseudo-noise. Without loss of generality one can use a code for the odd chirps that are sent from the second predetermined antenna 210 and the same code for the even chirps that are sent from the first predetermined antenna 205.

Thus, in the present example, this effect is mitigated because the transmit control signals are configured such that all the transmit antennas of a respective radar head get a (pseudo) random phase change per chirp. This phase change results in the targets of the transmit antennas of the other radar head being spread and suppressed. As a result, in some examples, the first and second predetermined frequency bands / first and second synchronisation bands can overlap providing more IF spectrum for identifying targets. By doubling of the sampling frequency of the ADC, the same range resolution can be obtained as without the sub-bands. Another important feature of the apparatus is that the power of the signals transmitted with frequencies in the middle of the IF spectrum can be reduced to prevent clipping of in the ADC.

This reduction in power does not affect Direction of Arrival estimation because the signals of the antenna are not involved in the creation of the snapshot but only used for phase-noise estimation. Reduction of the transmit power is possible even if the power of individual transmit antennas cannot be controlled. Thus, with reference to Figure 3, only the second predetermined antenna 210 from sensor head 106 is really used, and therefore the transmit antennas can be put on low power, while only the second predetermined antenna 210 is enabled.

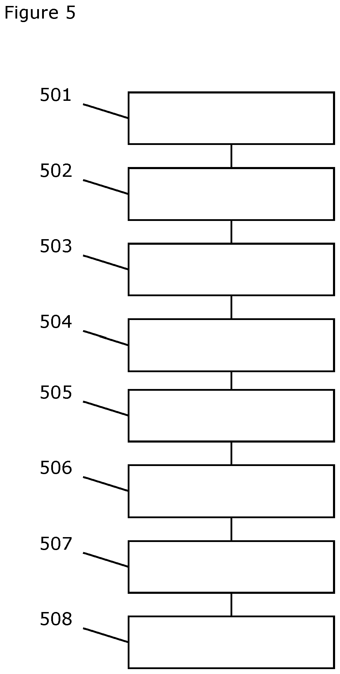

Figure 5 shows a flow chart illustrating an example method.

The method relates to operation of the apparatus 100 comprising the controller 102 configured to control transmission by a Distributed Coherent Radar, DCR, system 101 and the processor 103 configured to process radar signals received by the DCR system. The method comprising:
generating 501 first control signals configured to provide for transmission, by the DCR system, of a first chirp from a plurality of transmit antennas of a first radar head of the DCR system and, restrict transmission of said first chirp to a subset of a plurality of transmit antennas of a second radar head of the DCR system, wherein said first control signals are configured to provide for transmission of said first chirp by the subset of transmit antennas of the second radar head in a first predetermined frequency band different to one or more frequency bands in which the first radar head is caused to transmit said first chirp;
receiving 502 first radar signals from the first radar head of the DCR system in response to generation of the first control signals;
receiving 503 second radar signals from the second radar head of the DCR system in response to generation of the first control signals;
determining 504 a first phase-noise estimation based on a component of the second radar signals comprising a part of the second radar signals in said first predetermined frequency band.

Further, the method comprises:
generating 501 first control signals configured to provide for transmission, by the DCR system, of a first chirp from a plurality of transmit antennas of a first radar head of the DCR system, and for transmission of the first chirp from a first predetermined antenna of the first radar head and, restrict transmission of said first chirp to a second predetermined antenna of a second radar head of the DCR system, wherein said first control signals are configured to provide for transmission of said first chirp by the first predetermined antenna in a first predetermined frequency band and the transmission of said first chirp by the second predetermined antenna in a second predetermined frequency band, wherein the first and second predetermined frequency bands are different to one or more frequency bands in which the transmit antennas of the first radar head are caused to transmit said first chirp;
receiving 502 first radar signals from the first radar head of the DCR system in response to generation of the first control signals;
receiving 503 second radar signals from the second radar head of the DCR system in response to generation of the first control signals;
determining 504 a first phase-noise estimation based on a component first radar signal comprising a part of the first radar signals in said second predetermined frequency band and a component of the second radar signals comprising a part of the second radar signals in said first predetermined frequency band;
generating 505 second control signals configured to provide for transmission, by the DCR system, of a second chirp, subsequent to the first chirp, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in a third predetermined frequency band and the transmission of said second chirp by the second predetermined antenna in a fourth predetermined frequency band, wherein the third and fourth predetermined frequency bands are different to one or more frequency bands in which the transmit antennas of the second radar head are caused to transmit said second chirp;
receiving 506 third radar signals from the first radar head of the DCR system in response to generation of the second control signals;
receiving 507 fourth radar signals from the second radar head of the DCR system in response to generation of the second control signals; and
determining 508 a second phase-noise estimation based on based on a component of the third radar signals comprising a part of the third radar signals in said fourth predetermined frequency band and a component fourth radar signal comprising a part of the fourth radar signals in said third predetermined frequency band.

The method includes:
receiving the first and third radar signals from the first radar head of the DCR system including radar signals originating from the first predetermined antenna;
receiving the second and fourth radar signals from the second radar head of the DCR system including radar signals originating from the second predetermined antenna.

It will be appreciated that the first and second frequency bands may be the same or different. However, the first and second frequency bands are configured to provide for determination of the signal content in the received radar signals that was transmitted by the combined transmit-receive antennas by FDMA technique. In one example, there are three frequency bands, with sampling frequency fₛ =40 MHz we have (0-10 MHz), (10-15MHz) and (20-15MHz). For the first and second chirp we might allocate the predetermined antenna 205 to 10-15MHz and predetermined antenna 210 to (20-15MHz), but one can also exchange the bands in first and second chirp.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus comprising:
a controller configured to control transmission by a Distributed Coherent Radar, DCR, system
a processor configured to process radar signals received by the DCR system;
wherein the controller is configured to:
generate first control signals configured to provide for transmission, by the DCR system, of a first chirp from a plurality of transmit antennas of a first radar head of the DCR system, and for transmission of the first chirp from a first predetermined antenna of the first radar head and, restrict transmission of said first chirp to a second predetermined antenna of a second radar head of the DCR system, wherein said first control signals are configured to provide for transmission of said first chirp by the first predetermined antenna in a first predetermined frequency band and the transmission of said first chirp by the second predetermined antenna in a second predetermined frequency band, wherein the first and second predetermined frequency bands are different to one or more frequency bands in which the transmit antennas of the first radar head are caused to transmit said first chirp; and
generate second control signals configured to provide for transmission, by the DCR system, of a second chirp, subsequent to the first chirp, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in a third predetermined frequency band and the transmission of said second chirp by the second predetermined antenna in a fourth predetermined frequency band, wherein the third and fourth predetermined frequency bands are different to one or more frequency bands in which the transmit antennas of the second radar head are caused to transmit said second chirp; and
wherein the processor is configured to:
receive first radar signals from the first radar head of the DCR system in response to generation of the first control signals;
receive second radar signals from the second radar head of the DCR system in response to generation of the first control signals;
based on a component first radar signal comprising a part of the first radar signals in said second predetermined frequency band and a component second radar signal comprising a part of the second radar signals in said first predetermined frequency band, determine a first phase-noise estimation based on said component first radar signal and component second radar signal; and
receive third radar signals from the first radar head of the DCR system in response to generation of the second control signals;
receive fourth radar signals from the second radar head of the DCR system in response to generation of the second control signals;
based on a component third radar signal comprising a part of the third radar signals in said fourth predetermined frequency band and a component fourth radar signal comprising a part of the fourth radar signals in said third predetermined frequency band, determine a second phase-noise estimation based on said component third radar signal and said component fourth radar signal.

2. The apparatus of claim 1, including said DCR system, the DCR system comprising:
the first radar head having the plurality of transmit antennas and the first predetermined antenna, configured to provide for transmission of chirps, and a plurality of receive antennas configured to receive signals including one or more reflections of said chirps and to generate at least said first and third radar signals based on the received signals, wherein the first radar head provides for said transmission of the chirps and receipt of the signals based on a first time reference; and
the second radar head having the plurality of transmit antennas and the second predetermined antenna, configured to provide for transmission of chirps, and a plurality of receive antennas configured to receive signals including one or more reflections of said chirps and to generate at least said second and fourth radar signals based on the received signals, wherein the second radar head provides for said transmission of the chirps and receipt of the signals based on a second, different, time reference.

3. The apparatus of claim 2,
wherein said first predetermined antenna of the first radar head comprises a single transmit-receive antenna configured to both transmit the respective chirp and concurrently receive signals including said one or more reflections of said chirps for processing by the processor; and
wherein said second predetermined antenna of the second radar head comprises a single transmit-receive antenna configured to both transmit the respective chirp and concurrently receive the signals including said one or more reflections of said chirps for processing by the processor.

4. The apparatus of claim 3, wherein the first control signals are configured to provide for transmission, by the DCR system, of the first chirp from the first predetermined antenna of the first radar head and the second predetermined antenna of the second radar head with a lower power than that used for transmission for each of the plurality of transmit antennas of the first radar head; and
wherein the second control signals are configured to provide for transmission, by the DCR system, of the second chirp from the first predetermined antenna of the first radar head and the second predetermined antenna of the second radar head with a lower power than that used for transmission for each of the plurality of transmit antennas of the second radar head.

5. The apparatus of any preceding claim, wherein the first predetermined frequency band is the same as the fourth predetermined frequency band, and the second predetermined frequency band is the same as the third predetermined frequency band.

6. The apparatus of any one of claims 2 to 5, wherein the controller is configured to apply a frequency shift to one of the first time reference and the second time reference to cause a frequency offset between the first time reference and the second time reference.

7. The apparatus of any preceding claim, wherein the controller is configured to generate transmit control signals, including said first control signals and said second control signals, configured such that the transmission of chirps from said plurality of transmit antennas of the first head and the plurality of transmit antennas of the second head is based on a doppler division multiple access waveform.

8. The apparatus of any preceding claim, wherein the processor is configured to provide a downconversion to an intermediate frequency range of the first radar signals and the third radar signals from the first radar head and a downconversion to the intermediate frequency range of the second radar signals and the fourth radar signals from the second radar head.

9. The apparatus of claim 8, wherein the apparatus includes one or more phase rotators configured such that the component second radar signal and the component third radar signal are located in a middle and/or at upper and lower ends of the intermediate frequency range.

10. The apparatus of claim 7, wherein the transmit control signals are configured such that each transmit antenna of the plurality of transmit antennas of the first radar head and each transmit antenna of the plurality of transmit antennas of the second radar head are configured to transmit each chirp with a predetermined change in phase; and
wherein the processor is configured to provide a phase shift that reverses said predetermined change in phase for each chirp.

11. The apparatus of claim 10, wherein the predetermined change in phase is pseudo-random.

12. The apparatus of any preceding claim, wherein the processor and the controller is provided by a single DCR control device.

13. The apparatus of any preceding claim, wherein the apparatus comprises a vehicle and wherein the DCR system comprises an automotive radar for said vehicle.

14. A method of operation of a Distributed Coherent Radar, DCR, system comprising:
generating first control signals configured to provide for transmission, by the DCR system, of a first chirp from a plurality of transmit antennas of a first radar head of the DCR system, and for transmission of the first chirp from a first predetermined antenna of the first radar head and, restrict transmission of said first chirp to a second predetermined antenna of a second radar head of the DCR system, wherein said first control signals are configured to provide for transmission of said first chirp by the first predetermined antenna in a first predetermined frequency band and the transmission of said first chirp by the second predetermined antenna in a second predetermined frequency band, wherein the first and second predetermined frequency bands are different to one or more frequency bands in which the transmit antennas of the first radar head are caused to transmit said first chirp;
receiving first radar signals from the first radar head of the DCR system in response to generation of the first control signals;
receiving second radar signals from the second radar head of the DCR system in response to generation of the first control signals;
determining a first phase-noise estimation based on a component first radar signal comprising a part of the first radar signals in said second predetermined frequency band and a component of the second radar signals comprising a part of the second radar signals in said first predetermined frequency band;
generating second control signals configured to provide for transmission, by the DCR system, of a second chirp, subsequent to the first chirp, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in a third predetermined frequency band and the transmission of said second chirp by the second predetermined antenna in a fourth predetermined frequency band, wherein the third and fourth predetermined frequency bands are different to one or more frequency bands in which the transmit antennas of the second radar head are caused to transmit said second chirp;
receiving third radar signals from the first radar head of the DCR system in response to generation of the second control signals;
receiving fourth radar signals from the second radar head of the DCR system in response to generation of the second control signals; and
determining a second phase-noise estimation based on based on a component of the third radar signals comprising a part of the third radar signals in said fourth predetermined frequency band and a component fourth radar signal comprising a part of the fourth radar signals in said third predetermined frequency band.

15. The method of claim 14, wherein the method includes:
receiving the first and third radar signals from the first radar head of the DCR system including from the first predetermined antenna;
receiving the second and fourth radar signals from the second radar head of the DCR system including from the second predetermined antenna.

## Amended claims

### Amended claims in accordance with Rule 137(2) EPC.

1. An apparatus (100) comprising:
a controller (102) configured to control transmission by a Distributed Coherent Radar, DCR, system (101); and
a processor (103) configured to process radar signals received by the DCR system;
wherein the controller is configured to:
generate first control signals configured to provide for transmission, by the DCR system, of a first chirp, being in first and second predetermined frequency bands and one or more other frequency bands, from a plurality of transmit antennas (107) of a first radar head (105) of the DCR system, and for transmission of the first chirp from a first predetermined antenna (205) of the first radar head, and restrict transmission of said first chirp to only a second predetermined antenna (210) of a second radar head (106) of the DCR system, wherein said first control signals are configured to provide for transmission of said first chirp by the first predetermined antenna in the first predetermined frequency band and the transmission of said first chirp by the second predetermined antenna in the second predetermined frequency band, wherein the first and second predetermined frequency bands are different to the one or more other frequency bands in which the transmit antennas of the first radar head are caused to transmit said first chirp; and
generate second control signals configured to provide for transmission, by the DCR system, of a second chirp, subsequent to the first chirp and being in third and fourth predetermined frequency bands and the one or more other frequency bands,, from a plurality of transmit antennas (110) of the second radar head, and for transmission of the second chirp from the second predetermined antenna of the second radar head, and restrict transmission of said second chirp to only the first predetermined antenna (205) of the first radar head, wherein said second control signals are configured to provide for transmission of said second chirp by the first predetermined antenna of the first radar head in the third predetermined frequency band and the transmission of said second chirp by the second predetermined antenna in the fourth predetermined frequency band, wherein the third and fourth predetermined frequency bands are different to the one or more other frequency bands in which the transmit antennas of the second radar head are caused to transmit said second chirp; and
wherein the processor is configured to:
receive first radar signals from the first radar head of the DCR system in response to generation of the first control signals;
receive second radar signals from the second radar head of the DCR system in response to generation of the first control signals;
based on a component first radar signal comprising a part of the first radar signals in said second predetermined frequency band and a component second radar signal comprising a part of the second radar signals in said first predetermined frequency band, determine a first phase-noise estimation, being a difference between a respective phase-noise realisation in the second and first radar heads, based on said component first radar signal and component second radar signal; and
receive third radar signals from the first radar head of the DCR system in response to generation of the second control signals;
receive fourth radar signals from the second radar head of the DCR system in response to generation of the second control signals; and
based on a component third radar signal comprising a part of the third radar signals in said fourth predetermined frequency band and a component fourth radar signal comprising a part of the fourth radar signals in said third predetermined frequency band, determine a second phase-noise estimation, being a difference between a respective phase-noise realisation in the first and second radar heads based on said component third radar signal and said component fourth radar signal.

2. The apparatus of claim 1, including said DCR system, the DCR system comprising:
the first radar head (105) having the plurality of transmit antennas (107) and the first predetermined antenna (205), configured to provide for transmission of chirps, and a plurality of receive antennas configured to receive signals including one or more reflections of said chirps and to generate at least said first and third radar signals based on the received signals, wherein the first radar head provides for said transmission of the chirps and receipt of the signals based on a first time reference provided by a clock; and
the second radar head (106) having the plurality of transmit antennas (110) and the second predetermined antenna (210), configured to provide for transmission of chirps, and a plurality of receive antennas configured to receive signals including one or more reflections of said chirps and to generate at least said second and fourth radar signals based on the received signals, wherein the second radar head provides for said transmission of the chirps and receipt of the signals based on a second, different, time reference provided by a further clock.

3. The apparatus of claim 2,
wherein said first predetermined antenna of the first radar head comprises a single transmit-receive antenna configured to both transmit the respective chirp and concurrently receive signals including said one or more reflections of said chirps for processing by the processor; and
wherein said second predetermined antenna of the second radar head comprises a single transmit-receive antenna configured to both transmit the respective chirp and concurrently receive the signals including said one or more reflections of said chirps for processing by the processor.

4. The apparatus of claim 3, wherein the first control signals are configured to provide for transmission, by the DCR system, of the first chirp from the first predetermined antenna of the first radar head and the second predetermined antenna of the second radar head with a lower power than that used for transmission for each of the plurality of transmit antennas of the first radar head; and
wherein the second control signals are configured to provide for transmission, by the DCR system, of the second chirp from the first predetermined antenna of the first radar head and the second predetermined antenna of the second radar head with a lower power than that used for transmission for each of the plurality of transmit antennas of the second radar head.

5. The apparatus of any preceding claim, wherein the first predetermined frequency band is the same as the fourth predetermined frequency band, and the second predetermined frequency band is the same as the third predetermined frequency band.

6. The apparatus of any one of claims 2 to 4, or claim 5 when dependant on claim 2, wherein the controller is configured to apply a frequency shift to one of the first time reference and the second time reference to cause a frequency offset between the first time reference and the second time reference.

7. The apparatus of any preceding claim, wherein the controller is configured to generate transmit control signals, including said first control signals and said second control signals, configured such that the transmission of chirps from said plurality of transmit antennas of the first head and the plurality of transmit antennas of the second head is based on a doppler division multiple access waveform.

8. The apparatus of any preceding claim, wherein the processor is configured to provide a downconversion to an intermediate frequency range of the first radar signals and the third radar signals from the first radar head and a downconversion to the intermediate frequency range of the second radar signals and the fourth radar signals from the second radar head.

9. The apparatus of claim 8, wherein the apparatus includes one or more phase rotators configured such that the component second radar signal and the component third radar signal are located in a middle and/or at upper and lower ends of the intermediate frequency range.

10. The apparatus of claim 7, wherein the transmit control signals are configured such that each transmit antenna of the plurality of transmit antennas of the first radar head and each transmit antenna of the plurality of transmit antennas of the second radar head are configured to transmit each chirp with a predetermined change in phase; and
wherein the processor is configured to provide a phase shift that reverses said predetermined change in phase for each chirp.

11. The apparatus of claim 10, wherein the predetermined change in phase is pseudo-random.

12. The apparatus of any preceding claim, wherein the processor and the controller is provided by a single DCR control device.

13. The apparatus of any preceding claim, wherein the apparatus comprises a vehicle and wherein the DCR system comprises an automotive radar for said vehicle.

14. A method of operation of a Distributed Coherent Radar, DCR, system (101) comprising:
generating first control signals configured to provide for transmission, by the DCR system, of a first chirp, being in first and second predetermined frequency bands and one or more other frequency bands, from a plurality of transmit antennas (107) of a first radar head (105) of the DCR system, and for transmission of the first chirp from a first predetermined antenna (205) of the first radar head and, restrict transmission of said first chirp to only a second predetermined antenna (210) of a second radar head (106) of the DCR system, wherein said first control signals are configured to provide for transmission of said first chirp by the first predetermined antenna in the first predetermined frequency band and the transmission of said first chirp by the second predetermined antenna in the second predetermined frequency band, wherein the first and second predetermined frequency bands are different to the one or more other frequency bands in which the transmit antennas of the first radar head are caused to transmit said first chirp;
receiving first radar signals from the first radar head of the DCR system in response to generation of the first control signals;
receiving second radar signals from the second radar head of the DCR system in response to generation of the first control signals;
determining a first phase-noise estimation, being a difference between a respective phase-noise realisation in the second and first radar heads, based on a component first radar signal comprising a part of the first radar signals in said second predetermined frequency band and a component of the second radar signals comprising a part of the second radar signals in said first predetermined frequency band;
generating second control signals configured to provide for transmission, by the DCR system, of a second chirp, subsequent to the first chirp and being in a third and fourth predetermined frequency bands and the one or more other frequency bands, from a plurality of transmit antennas of the second radar head, and for transmission of the second chirp from the second predetermined antenna of the second radar head and, restrict transmission of said second chirp to the first predetermined antenna of the first radar head, wherein said second control signals are configured to provide for transmission of said second chirp by the first predetermined antenna of the first radar head in the third predetermined frequency band and the transmission of said second chirp by the second predetermined antenna in the fourth predetermined frequency band, wherein the third and fourth predetermined frequency bands are different to the one or more other frequency bands in which the transmit antennas of the second radar head are caused to transmit said second chirp;
receiving third radar signals from the first radar head of the DCR system in response to generation of the second control signals;
receiving fourth radar signals from the second radar head of the DCR system in response to generation of the second control signals; and
determining a second phase-noise estimation, being a difference between a respective phase-noise realisation in the first and second radar heads, based on based on a component of the third radar signals comprising a part of the third radar signals in said fourth predetermined frequency band and a component fourth radar signal comprising a part of the fourth radar signals in said third predetermined frequency band.

15. The method of claim 14, wherein the method includes:
receiving the first and third radar signals from the first radar head of the DCR system including from the first predetermined antenna;
receiving the second and fourth radar signals from the second radar head of the DCR system including from the second predetermined antenna.
